# EUROPÄISCHE PATENTSCHRIFT

(11) **EP 2 270 403 B1**
(45) Veröffentlichungstag und Bekanntmachung des Hinweises auf die Patenterteilung: **18.04.2012**
(21) Anmeldenummer: 09008599.4
(22) Anmeldetag: 01.07.2009
(51) Int. Cl.: F24J 2/52

(54) **Solartechnischer Kollektor mit Tragschiene**
Solar collector with bearing rail
Collecteur solaire avec rail de support

(43) Veröffentlichungstag der Anmeldung: 05.01.2011
(73) Patentinhaber: GREENoneTEC, 9300 St. Veit/Glan (AT)
(72) Erfinder: Hochreiter, Erwin, 9020 Klagenfurt (AT); Gamero, Antonio, 9020 Klagenfurt (AT); Koschier, Günter, 9314 Launsdorf (AT); Rankl, Heinz, 9321 Passering (AT)
(74) Vertreter: Becker, Thomas

(56) Entgegenhaltungen:
- DE-A1-102005 039 495
- DE-A1-102006 053 831
- DE-A1-102007 033 323
- DE-U1-202005 001 469
- DE-U1-202005 006 951
- US-A1- 2008 172 955

## Beschreibung

Die Erfindung betrifft einen solartechnischen Kollektor mit Tragschiene, das heißt einer Schiene zur Aufnahme und Befestigung des solartechnischen Kollektors.

Der Gegenstand der Erfindung kann Bestandteil eines komplexen Installations- und Befestigungssystems für solartechnische Kollektoren (insbesondere Warmwasser- und Photovoltaik-Kollektoren) sein, die beispielsweise auf einem Dach, in einem Dach, auf oder in einer Gebäudefassade installiert werden.

Die genannten Kollektoren weisen häufig ein flaches quaderförmiges Gehäuse mit Abmessungen (Breite, Länge, Höhe) von ca. 100 x 200 x 10 cm auf. Sie sind als so genannte Rahmenkollektoren oder Wannenkollektoren bekannt.

Aus der DE 10 2005 039 495 A1 ist eine Tragkonstruktion für Photovoltaik-Module bekannt, die ein Profilelement mit mindestens einem Aufnahmekanal aufweist, wobei der Aufnahmekanal mit der Außenseite des Profilelementes über einen Durchlass in Verbindung steht und der Durchlass kleiner ist als der Aufnahmekanal.

Gemäß DE 10 2007 033 323 A1 liegt ein Kollektor flach auf einer korrespondierenden Schiene und eine Befestigung erfolgt über Profilelemente, wobei der Kollektor auch dann jeweils flächig auf benachbarten Tragelementen aufliegt.

Dies gilt analog für die in der DE 10 2006 053 831 A1 beschriebene Befestigungsvorrichtung für Solarmodule.

Bisherige Befestigungssysteme sind weitestgehend starr und können die lokalen konstruktiven Vorgaben nicht berücksichtigen. Im Ergebnis werden Kollektoren häufig schief und optisch unzureichend montiert. Insbesondere bei einer Kollektor-Montage auf einer schrägen Fläche besteht die Gefahr, dass der Kollektor auf entsprechenden Befestigungsschienen abrutscht, bevor er in die gewünschte Endposition gebracht und fixiert werden kann.

Der Erfindung liegt insoweit die Aufgabe zugrunde, einen solartechnischen Kollektor mit Tragschiene anzubieten, wobei die Schiene eine einfache Montage eines Befestigungsmittels erlaubt, mit dem der Kollektor an der Schiene befestigt wird. Darüber hinaus soll die Schiene eine einfache und sichere Positionierung des Kollektors bei der Montage ermöglichen.

Zur Lösung dieser Aufgabe sieht die Erfindung eine Tragschiene vor, die drei Abschnitte umfasst. Ein erster Abschnitt dient dazu, ein erstes Befestigungsmittel aufzunehmen, das zwischen Schiene und Kollektor geschaltet wird, um den Kollektor an der Schiene zu befestigen.

Ein zweiter Abschnitt der Schiene ist dazu bestimmt, die Schiene selbst unmittelbar oder mittelbar an einer zugehörigen Auflagefläche wie einem Dach oder einer Fassade zu befestigen.

Der dritte Abschnitt dient dazu, den Kollektor bereits bei der Montage auf der Schiene sicher und definiert auszurichten, und zwar ohne dazu besondere Werkzeuge und/oder andere Hilfsmittel zu benötigen.

Der erste Abschnitt ist so ausgebildet, dass er mindestens eine Auflagefläche für den Kollektor bildet, während der dritte Abschnitt gegenüber dieser Auflagefläche in Richtung auf den Kollektor vorsteht. Der Kollektor wird entsprechend mit einer nutartigen Vertiefung im Bodenbereich ausgebildet, die der Aufnahme des dritten Abschnitts dient, so dass es bei der Montage zu einer Verrastung zwischen dem Kollektor und dem dritten Abschnitt der Tragschiene kommt. Dadurch wird bereits während der Montagephase erreicht, dass der Kollektor nicht mehr auf der Schiene abrutschen kann, was insbesondere für Montagen auf Schrägflächen wichtig ist.

In ihrer allgemeinsten Ausführungsform betrifft die Erfindung einen solartechnischen Kollektor mit Tragschiene gemäß Anspruch 1.

### Bezüglich des ersten Abschnitts gilt:

Dieser Abschnitt bildet eine Aufnahme für ein erstes Befestigungsmittel. Mehrere Befestigungsmittel können an unterschiedlichen Positionen entlang einer oder mehrerer Schienen angeordnet werden, um einen oder mehrere Kollektoren festzulegen. Das Befestigungsmittel kann über die Öffnung zwischen den Endabschnitten der Schenkel in das U-Profil eingeführt werden. Danach wird das Befestigungsmittel gedreht, beispielsweise um 90°. Dazu weist der in das U-Profil eingeführte Abschnitt des Befestigungsmittels eine Form mit einer Schmalseite und einer Breitseite auf, wobei die Breitseite breiter ist als die schlitzförmige Öffnung. Dies ermöglicht es, das Befestigungsmittel mit dem in das U-Profil eingeführten Abschnitt gegen die Endabschnitte der Schenkel des ersten Abschnitts der Schiene zu führen und dort festzulegen. Dabei wirken die Endabschnitte der Schenkel des ersten Abschnitts der Tragschiene als Anschlag und Gegenlager für das Befestigungsmittel, welches an seinem gegenüberliegenden Ende am Kollektor befestigt wird. Auf diese Weise wird der Kollektor gegenüber der Tragschiene verspannt und in der gewünschten Position fixiert. Aufgrund der fluchtenden Ausrichtung der Endabschnitte der Schenkel des ersten Abschnitts der Tragschiene wird gleichzeitig eine Auflagefläche für den Boden des Kollektors geschaffen.

Parallel dazu erfolgt die bereits erwähnte Verrastung des dritten Abschnitts der Tragschiene mit einer korrespondierenden Nut im Boden des Kollektors. Dabei verläuft der dritte Abschnitt im Wesentlichen parallel zur Schiene. Daraus resultiert, dass die im Kollektor angebrachte Nut bei üblicher Montage im Wesentlichen senkrecht zu den parallelen Längsseiten des Kollektors verläuft.

Soweit dies gewünscht wird, können auch benachbart zu beiden Endabschnitten der Schenkel des ersten Abschnitts der Tragschiene entsprechende dritte Abschnitte (Verrastungselemente) vorgesehen werden. Der Kollektor muss dann mindestens zwei der genannten Nuten aufweisen, in die die dritten Abschnitte der Tragschiene eingreifen können.

Der dritte Abschnitt verläuft beispielsweise senkrecht zu den Endabschnitten der Schenkel und entsprechend senkrecht zur Basis des genannten U-Profils des ersten Abschnitts. Der dritte Abschnitt kann zumindest in seinem, vom ersten Abschnitt wegweisenden Teil, die Form eines Steges aufweisen. Alternativ kann der dritte Abschnitt mit seinem Verrastungsteil einen Querschnitt aufweisen, der einem rechtwinkligen Trapez entspricht. Die Schrägfläche des Trapezes erleichtert das Einrasten in die korrespondierende Nut des Kollektors, während der gegenüberliegende Flächenabschnitt des Trapezes eine sichere Anlage an einer korrespondierenden Anschlagfläche in der Nut des Kollektors erlaubt.

Die Schenkel des ersten Abschnitts der Tragschiene verlaufen nach einer Ausführungsform senkrecht zur Basis und parallel zueinander (mit Ausnahme der Endabschnitte). Diese Endabschnitte verlaufen vorzugsweise parallel zur Basis, um die gewünschte gemeinsame Auflage für den Kollektor zu definieren.

Eine weitere Ausführungsform der Erfindung sieht vor, die Endabschnitte an ihren freien Enden, also benachbart zu der schlitzförmigen Öffnung, mit Abkröpfungen auszubilden, die in Richtung auf die Basis des U-Profils verlaufen. Diese Abkröpfungen bilden eine zusätzliche Verrastungsmöglichkeit für das Befestigungsmittel, um dieses sicher an der Schiene festzulegen.

Auch der zweite Abschnitt kann im Querschnitt im Wesentlichen ein U-Profil aufweisen, also mit einer Basis und zwei, von der Basis abstehenden Schenkeln.

Die Bauform der Tragschiene wird vereinfacht, wenn die Schenkel des zweiten U-förmigen Abschnitts senkrecht zu den Schenkeln des ersten U-förmigen Abschnitts verlaufen. Dies ermöglicht es, ein zweites Befestigungsmittel seitlich, also parallel zur Basis des ersten Abschnitts, in den zweiten Abschnitt einzuführen und dort festzulegen.

Die Bauform der Schiene wird dabei zusätzlich vereinfacht, wenn ein Schenkel des zweiten U-förmigen Abschnitts von der Basis des ersten U-förmigen Abschnitts gebildet wird. Diese Ausführungsform ist in der nachfolgenden Figurenbeschreibung näher dargestellt.

Die Schenkel des zweiten U-förmigen Abschnitts können innenseitig eine Riffelung aufweisen. Diese Riffelung ermöglicht es, das zweite Befestigungsmittel beispielsweise mittels einer Schraube an diesem zweiten Abschnitt der Schiene zu befestigen, wobei das Gewinde der Schraube in die genannte Riffelung eingreift.

Bei einer Ausführungsform, bei der ein Schenkel des ersten U-förmigen Abschnitts außenseitig eine Riffelung aufweist, und zwar der Schenkel, der dem zweiten Abschnitt der Tragschiene benachbart ist, wird zusätzlich die Möglichkeit geschaffen, das zweite Befestigungsmittel in unterschiedlichen Positionen gegenüber dem ersten Abschnitt der Tragschiene festzulegen. Damit lassen sich Toleranzen bei der Montage sehr einfach ausgleichen.

Die mindestens drei Abschnitte der Tragschiene können diskrete Abschnitte sein, die miteinander (untereinander) verbunden werden. Bevorzugt ist jedoch eine Ausführungsform, bei der erster, zweiter und dritter Abschnitt materialschlüssig miteinander verbunden sind, wobei sich diese Ausführungsform beispielsweise durch Strangpressen der Tragschiene realisieren lässt. Dies gilt sowohl für eine Tragschiene aus Metall wie für eine Tragschiene aus Kunststoff.

Die Erfindung wird nachstehend anhand eines Ausführungsbeispieles näher erläutert. Dabei zeigen, jeweils in schematisierter Darstellung,
- Figur 1:: eine perspektivische Ansicht einer Tragschiene im Zusammenwirken mit einem ersten und zweiten Befestigungs- mittel und einem zugehörigen Kollektor
- Figur 2:: eine Seitenansicht einer weiteren Ausführungsform der Tragschiene.

In den Figuren sind gleiche oder gleich wirkende Bauteile mit gleichen Bezugsziffern dargestellt. Ortsangaben wie "oben, unten, links, rechts" beziehen sich auf die dargestellte Montageposition der Tragschiene.

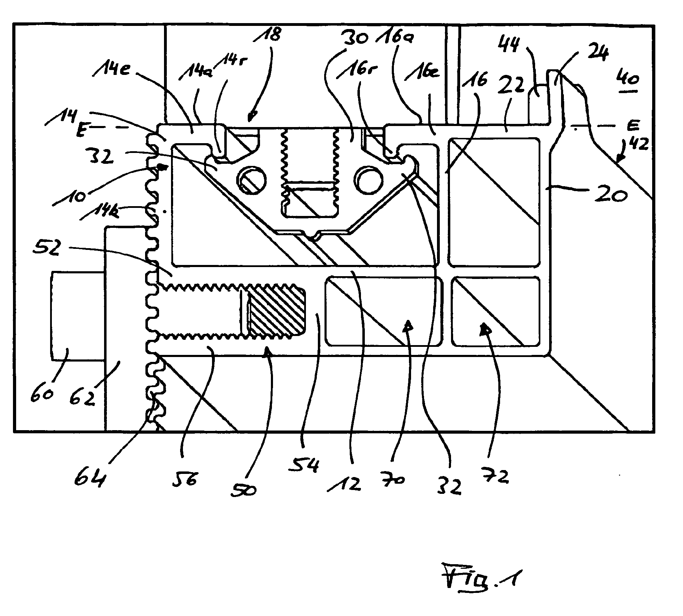

Die Tragschiene gemäß Figur 1 umfasst einen ersten Abschnitt 10, der im Querschnitt im Wesentlichen ein U-Profil aufweist mit einer Basis 12 und zwei von der Basis 12 abstehenden Schenkeln 14, 16. Endabschnitte 14e, 16e der beiden Schenkel 14, 16 verlaufen zueinander fluchtend nach innen, aufeinander zu, und weisen wiederum endseitig nach unten (in Richtung auf die Basis 12) vorstehende Rastnasen 14r, 16r auf. Zwischen den Endabschnitten 14e, 16e wird eine schlitzförmige Öffnung 18 gebildet, die der Aufnahme und Festlegung eines ersten Befestigungsmittels 30 dient. Die Endabschnitte 14e, 16e verlaufen fluchtend zueinander. Ihre Außenflächen 14a, 16a liegen entsprechend in einer Ebene E, auf der ein Kollektor 40 mit seinem Boden 42 aufliegt.

Das Befestigungsmittel 30 wird mit seinem unteren Abschnitt zur Montage durch die Öffnung 18 in den quaderförmigen Raum des ersten Abschnittes 10 eingeführt, dann um 90° in die dargestellte Position verschwenkt, und anschließend nach oben (auf hier nicht dargestellte Weise) bewegt, bis seitliche Flügel 32 des Befestigungsmittels 30 hinter die Rastschienen 14r, 16r greifen. Gleichzeitig erfolgt eine Fixierung des Kollektors 40 am gegenüberliegenden Ende des Befestigungsmittels 30, so dass im Ergebnis der Kollektor 40 über das Befestigungsmittel 30 auf der Schiene positioniert und fixiert wird. Eine analoge Befestigung mit weiteren Befestigungsmitteln erfolgt an anderer Stelle der Schiene.

Rechts neben dem ersten Abschnitt 10 ist ein zweiter Abschnitt 20 zu erkennen, der als Hohlprofil mit Rechteckquerschnitt gestaltet ist, wobei eine obere Traverse 22 fluchtend zu den Endabschnitten 14e, 16e und in Verlängerung des Endabschnitts 16e verläuft. Von der Traverse 22 steht ein Steg 24 senkrecht nach oben ab, der in eine korrespondierende Nut 44 im Boden 42 des Kollektors 40 eingreift und diesen so gegen Verrutschen auf der Schiene sichert.

Ein Abschnitt der Basis 12 des ersten Abschnitts 10 (in Figur 1: links) bildet gleichzeitig einen Schenkel 52 eines zweiten Abschnitts 50 der Tragschiene, wobei der zweite Abschnitt 50 ebenfalls im Querschnitt im Wesentlichen ein U-Profil aufweist, wobei die Basis das Bezugszeichen 54 trägt und senkrecht zur Basis 12 des ersten Abschnitts 10 verläuft, während der weitere Schenkel mit 56 bezeichnet ist.

Innenseitig weisen beide Schenkel 52, 56 eine Riffelung 58 auf. Diese Riffelung 58 dient zur Festlegung einer Gewindeschraube 60, mit deren Hilfe ein zweites Befestigungsmittel 62 an der Tragschiene festgelegt wird, wie in Figur 1 dargestellt, wobei dieses zweite Befestigungsmittel 62 am gegenüberliegenden Ende beispielsweise auf einer Dachfläche befestigt wird.

Das zweite Befestigungsmittel 62 ist auf der der Tragschiene zugewandten Fläche mit einer Riffelung 64 versehen, die in eine korrespondierende Riffelung 14k auf der Außenseite des Schenkels 14 des ersten Abschnitts 10 zusammenwirkt. Wie der Figur zu entnehmen ist, ermöglichen die Riffelungen 64, 14k, das zweite Befestigungsmittel 62 in unterschiedlichen Höhen gegenüber der Tragschiene festzulegen.

Profilabschnitte 70, 72 unterhalb des ersten Abschnitts 10 beziehungsweise unterhalb des dritten Abschnitts 20 ergänzen die Tragschiene so, dass sich insgesamt ein im Wesentlichen rechteckförmiger Querschnitt ergibt.

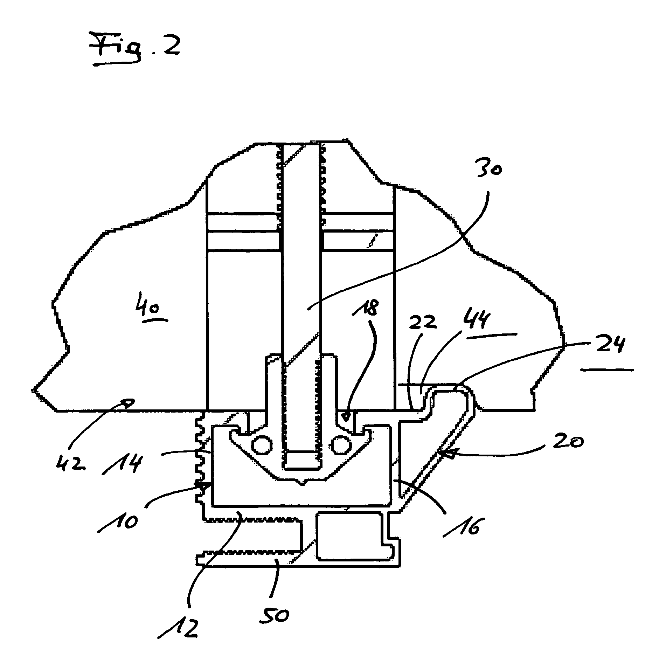

Die Ausführungsform nach Figur 2 unterscheidet sich von der Ausführungsform nach Figur 1 im Wesentlichen dadurch, dass anstelle eines diskreten Steges 24 dieses Verrastungselement unmittelbar aus dem zweiten Abschnitt 20 ausgeformt wird, wobei der Steg 24 im Querschnitt angenähert ein Rechteckprofil besitzt. Anstelle des Rechteckprofils kann auch ein rechtwinkliges Trapezprofil gewählt werden. Auch bei dieser Ausführungsform dient der Steg 24 dazu, in eine korrespondierende Nut 44 des Kollektors 40 einzugreifen und diesen gegen Verrutschen gegenüber der Tragschiene zu sichern.

Für die Tragschiene muss deshalb auch der zugehörige Kollektor konstruktiv angepasst werden, und zwar durch Ausbildung mindestens einer, vorzugsweise mehrerer Nuten im Bodenbereich zur Aufnahme des dritten Abschnitts der Tragschiene beziehungsweise des dadurch ausgebildeten Steges 24. Diese Nuten 44 verlaufen vorzugsweise parallel beziehungsweise senkrecht zu Seitenflächen des Kollektors 40. Sie können regelmäßig oder unregelmäßig verteilt über den Boden 42 des Kollektors 40 angeordnet werden. Die Nuten/Sicken 44 haben den zusätzlichen Vorteil einer Versteifung des Kollektorbodens 42.

## Patentansprüche

1. Solartechnischer Kollektor (40) mit Tragschiene, wobei die Tragschiene umfasst:
1.1 einen ersten Abschnitt (10), der im Querschnitt im Wesentlichen ein U-Profil aufweist, mit einer Basis (12) und zwei, von der Basis (12) abstehenden Schenkeln (14, 16), wobei
1.2 Endabschnitte (14e, 16e) der beiden Schenkel (14, 16) unter Ausbildung einer schlitzförmigen Öffnung (18) zwischen den Endabschnitten (14e, 16e) zur Aufnahme und Festlegung eines ersten Befestigungsmittels (30) zur Festlegung des Kollektors (40) an der Tragschiene, zueinander fluchtend nach innen, aufeinander zu verlaufen, wobei die Außenflächen (14a, 16a) der Endabschnitte (14e, 16e) eine Ebene und Auflagefläche für den Kollektor bilden,
1.3 einen zweiten Abschnitt (50) zur Aufnahme und Festlegung eines zweiten Befestigungsmittels (62),
1.4 mindestens einen dritten Abschnitt (20), benachbart zu einem Endabschnitt (16e) eines Schenkels (16) des ersten Abschnitts (10), wobei der dritte Abschnitt (20), zumindest teilweise, in Bezug auf die Ebene (E) in eine Richtung vorsteht, die vom ersten Abschnitt (10) weg weist
**dadurch gekennzeichnet, dass**
der Kollektor (40) mit einer nutförmigen Vertiefung (44) im Bodenbereich ausgebildet ist, die zur Aufnahme des dritten Abschnitts (20) dient.

2. Solartechnischer Kollektor nach Anspruch 1, bei dem die Schenkel (14, 16) des ersten Abschnitts (10) der Tragschiene, mit Ausnahme ihrer Endabschnitte (14e, 16e), senkrecht von der Basis (12) abstehen und parallel zueinander verlaufen.

3. Solartechnischer Kollektor nach Anspruch 1, bei dem die Endabschnitte (14e, 16e) der Schenkel (14, 16) des ersten Abschnitts (10) der Tragschiene parallel zur Basis (12) verlaufen.

4. Solartechnischer Kollektor nach Anspruch 1, bei dem die Endabschnitte (14e, 16e) der Schenkel (14, 16) des ersten Abschnitts (10) der Tragschiene an ihren freien Enden, die die schlitzförmige Öffnung (18) seitlich begrenzen, Abkröpfungen (14r, 16r) aufweisen, die in Richtung der Basis (12) verlaufen.

5. Solartechnischer Kollektor nach Anspruch 1, bei dem der zweite Abschnitt (50) der Tragschiene im Querschnitt im Wesentlichen ein U-Profil aufweist mit einer Basis (54) und zwei, von der Basis (54) abstehenden Schenkeln (52, 56).

6. Solartechnischer Kollektor nach Anspruch 5, bei dem die Schenkel (52, 56) des zweiten U-förmigen Abschnitts (50) senkrecht zu den Schenkeln (14, 16) des ersten U-förmigen Abschnitts (10) verlaufen.

7. Solartechnischer Kollektor nach Anspruch 5, bei dem ein Schenkel (52) des zweiten U-förmigen Abschnitts (50) von der Basis (12) des ersten U-förmigen Abschnitts (10) gebildet wird.

8. Solartechnischer Kollektor nach Anspruch 5, bei dem die Schenkel (52, 56) des zweiten U-förmigen Abschnitts (50) innenseitig eine Riffelung (58) aufweisen.

9. Solartechnischer Kollektor nach Anspruch 5, bei dem ein Schenkel (14) des ersten U-förmigen Abschnitts (10) außenseitig eine Riffelung (14k) aufweist.

10. Solartechnischer Kollektor nach Anspruch 1, bei dem der dritte Abschnitt (20) der Tragschiene zumindest teilweise senkrecht zu den Endabschnitten (14e, 16e) der Schenkel (14, 16) des ersten Abschnitts (10) verläuft.

11. Solartechnischer Kollektor nach Anspruch 1, bei dem der dritte Abschnitt (20) der Tragschiene zumindest in seinem, vom ersten Abschnitt (10) weg weisenden Teil, die Form eines Steges (24) aufweist.

12. Solartechnischer Kollektor nach Anspruch 1, bei dem der dritte Abschnitt (20) der Tragschiene zumindest in seinem, vom ersten Abschnitt (10) weg weisenden Teil, einen Querschnitt aufweist, der einem rechtwinkligen Trapez entspricht.

13. Solartechnischer Kollektor nach Anspruch 1, bei dem der erste, zweite und dritte Abschnitt (10. 50, 20) der Tragschiene materialschlüssig untereinander verbunden sind.

14. Solartechnischer nach Anspruch 1, dessen Tragschiene als Strangpressteil aus Metall oder Kunststoff ausgebildet ist.

## Claims

1. A solar collector (40) with a support rail the support rail comprising:
1.1 a first section (10) with an essentially U-shaped cross-sectional profile with a base (12) and two limbs (14, 16) protruding from the base (12),
1.2 end sections (14e, 16e) of the two limbs (14, 16) extend inward in alignment with one another and toward one another such that a slot-shaped opening (18) for accommodating and fixing a first mounting means (30) is formed between the end sections (14e, 16e), wherein the outer surfaces (14a, 16a) of said end sections (14e, 16e) present a plane and a support surface for the collector (40),
1.3 a second section (50) for accommodating and fixing a second mounting means (62),
1.4 at least one third section (20) adjacent to an end section (16e) of one limb (16) of said first section (10), wherein the third section (20) at least in part protrudes with respect to a plane (E) in a direction that points away from the first section (10)
**characterized in that**
the collector (40) provides a groove-like cavity in the bottom area to incorporate the third section (20).

2. The solar collector according to Claim 1, wherein the limbs (14, 16) of the first section (10) of the support rail perpendicularly protrude from the base (12) and extend parallel to one another, with the exception of their end sections (14e, 16e).

3. The solar collector according to Claim 1, wherein the end sections (14e, 16e) of the limbs (14, 16) extend parallel to the base (12).

4. The solar collector according to Claim 1, wherein the end sections (14e, 16e) of the limbs (14, 16) of the first section (10) of the support rail feature bends (14r, 16r) extending in the direction towards the base (12) at their free ends that laterally define the slot-shaped opening (18).

5. The solar collector according to Claim 1, wherein the second section (50) of the support rail has an essentially U-shaped cross-sectional profile with a base (54) and two limbs (52, 56) that protrude from the base (54).

6. The solar collector according to Claim 5, wherein the limbs (52, 56) of the second U-shaped section (50) extend perpendicular to the limbs (14, 16) of the first U-shaped section (10).

7. The solar collector according to Claim 5, wherein one limb (52) of the second U-shaped section (50) is formed by the base (12) of the first U-shaped section (10).

8. The solar collector according to Claim 5, wherein the inner side of the limbs (52, 56) of the second U-shaped section (50) features a fluting (58).

9. The solar collector according to Claim 5, wherein the outer side of one limb (14) of the first U-shaped section (10) features a fluting (14k).

10. The solar collector according to Claim 1, the third section (20) of the support rail of which extends at least in part perpendicular to the end sections (14e, 16e) of the limbs (14, 16) of the first section (10).

11. The solar collector according to Claim 1, the third section (20) of the support rail of which has the shape of a web (24) at least in its part that points away from the first section (10).

12. The solar collector according to Claim 1, the third section (20) of the support rail of which has a cross section that corresponds to a right-angled trapezoid at least in its part that points away from the first section (10).

13. The solar collector according to Claim 1, the first, second and third sections (10, 50, 20) of which are integrally connected to one another.

14. The solar collector according to Claim 1, the support rail of which being realized in the form of an extrusion-moulded part of metal or plastic.

## Revendications

1. Collecteur (40) héliosolaire avec rail porteur, le rail porteur comprenant :
1.1 un premier tronçon (10), qui présente en section essentiellement un profilé en U, avec une base (12) et deux branches (14, 16) dépassant de la base (12),
1.2 des tronçons d'extrémité (14e, 16e) des deux branches (14, 16) étant agencés les uns vers les autres, alignés les uns par rapport aux autres vers l'intérieur, en formant une ouverture (18) en forme de fente entre les tronçons d'extrémité (14e, 16e) pour le logement et le blocage d'un premier moyen de fixation (30) pour le blocage du collecteur (40) sur le rail porteur, les surfaces extérieures (14a, 16a) des tronçons d'extrémité (14e, 16e) formant un plan et une surface d'appui pour le collecteur,
1.3 un second tronçon (50) pour le logement et le blocage d'un second moyen de fixation (62),
1.4 au moins un troisième tronçon (20), à proximité d'un tronçon d'extrémité (16e) d'une branche (16) du premier tronçon (10),
le troisième tronçon (20) dépassant au moins partiellement par rapport au plan (E) dans une direction qui part du premier tronçon (10),
**caractérisé en ce que**
le collecteur (40) est formé avec une cavité (44) en forme de rainure dans la zone du fond qui sert au logement du troisième tronçon (20).

2. Collecteur héliosolaire selon la revendication 1, sur lequel les branches (14, 16) du premier tronçon (10) du rail porteur dépassent, à l'exception de leurs tronçons d'extrémité (14e, 16e), à la perpendiculaire de la base (12) et sont agencées parallèlement entre elles.

3. Collecteur héliosolaire selon la revendication 1, sur lequel les tronçons d'extrémité (14e, 16e) des branches (14, 16) du premier tronçon (10) du rail porteur sont agencés parallèlement à la base (12).

4. Collecteur héliosolaire selon la revendication 1, sur lequel les tronçons d'extrémité (14e, 16e) des branches (14, 16) du premier tronçon (10) du rail porteur présentent sur leurs extrémités libres, qui limitent latéralement l'ouverture (18) en forme de fente, des parties coudées (14r, 16r) qui vont en direction de la base (12).

5. Collecteur héliosolaire selon la revendication 1, sur lequel le second tronçon (50) du rail porteur présente en section essentiellement un profilé en U avec une base (54) et deux branches (52, 56) dépassant de la base (54).

6. Collecteur héliosolaire selon la revendication 5, sur lequel les branches (52, 56) du second tronçon (50) en U sont agencées perpendiculairement aux branches (14, 16) du premier tronçon (10) en U.

7. Collecteur héliosolaire selon la revendication 5, sur lequel une branche (52) du second tronçon (50) en U est formée par la base (12) du premier tronçon (10) en U.

8. Collecteur héliosolaire selon la revendication 5, sur lequel les branches (52, 56) du second tronçon (50) en U présentent côté intérieur un rainurage (58).

9. Collecteur héliosolaire selon la revendication 5, sur lequel une branche (14) du premier tronçon (10) en U présente côté extérieur un rainurage (14k).

10. Collecteur héliosolaire selon la revendication 1, sur lequel le troisième tronçon (20) du rail porteur est agencé au moins en partie perpendiculairement aux tronçons d'extrémité (14e, 16e) des branches (14, 16) du premier tronçon (10).

11. Collecteur héliosolaire selon la revendication 1, sur lequel le troisième tronçon (20) du rail porteur présente la forme d'une entretoise (24), au moins dans sa partie partant du premier tronçon (10).

12. Collecteur héliosolaire selon la revendication 1, sur lequel le troisième tronçon (20) du rail porteur présente au moins dans sa partie partant du premier tronçon (10) une section qui correspond à un trapèze rectangle.

13. Collecteur héliosolaire selon la revendication 1, sur lequel les premier, deuxième et troisième tronçons (10, 50, 20) du rail porteur sont reliés entre eux par adhérence de matière.

14. Collecteur héliosolaire selon la revendication 1, dont le rail porteur est conçu comme pièce extrudée en métal ou en matière synthétique.
